# EUROPEAN PATENT SPECIFICATION

(11) **EP 2 999 332 B1**
(45) Date of publication and mention of the grant of the patent: **05.08.2020**
(21) Application number: 14729461.5
(22) Date of filing: 22.05.2014
(51) Int. Cl.: A01N 3/02

(54) **A METHOD OF PRESERVING FRESH ORNAMENTAL PLANT PARTS**
VERFAHREN ZUR KONSERVIERUNG VON FRISCHEN ZIERPFLANZENTEILEN
PROCÉDÉ DE PRÉSERVATION DE PARTIES DE PLANTES ORNEMENTALES FRAÎCHES

(30) Priority: 23.05.2013 EP 13168900; 23.05.2013 EP 13168906
(43) Date of publication of application: 30.03.2016
(73) Proprietor: Longbloom IP B.V., 9471 AP Zuidlaren (NL)
(72) Inventor: MENÉNDEZ GONZÁLEZ, Reyes, 2628 LV Delft (NL); RADEMAKER, Lex, 1244 NR Ankeveen (NL); TRAMBITAS, Daniela Oana, 2274 EB Voorburg (NL)
(74) Representative: EP&C
(86) International application number: PCT/NL2014/050325
(87) International publication number: WO 2014/189376

(56) References cited:
- EP-A2- 1 016 343
- WO-A1-2005/122776
- US-A- 4 287 222
- US-A- 4 664 956
- US-A- 5 252 537

## Description

### TECHNICAL FIELD OF THE INVENTION

The present invention relates to a method for the preservation of fresh ornamental plant parts, such as cut flowers. More particularly, the invention provides a method of preserving fresh ornamental plant parts by replacing a considerable fraction of the water contained in said plant parts with polyethylene glycol, said method comprising (i) contacting the fresh ornamental plant parts with a preservation medium containing a liquefied or supercritical solvent and polyethylene glycol, said medium having a pressure of at least 30 bar; and (ii) recovering the preserved ornamental plant parts.

The present method yields preserved ornamental plant parts having a very natural, fresh appearance that is retained for several weeks or even for several months, without the need of any special attention or care.

The invention further concerns a preserved cut flower having a fresh appearance that can be obtained by the aforementioned preservation method.

### BACKGROUND OF THE INVENTION

It is customary around the world to offer bouquets of cut flowers as a gift to express sentiments. Furthermore, flower bouquets are widely used as an attractive decor for homes, public buildings etc. Unfortunately, however, cut flowers have a very limited shelf life, and are adversely affected by elevated temperatures, drafts, low humidity, vibration, and other environmental factors.

Many cut flowers must be disposed of unsold due to spoilage in transit and while they are on display prior to sale. Attempts have been made to prolong the usable life of cut flowers during transport, so that they arrive at their destination while still looking fresh and viable and in condition for display and sale. Flower vendors also attempt to prolong the usable life of cut flowers as much as possible while they are on display prior to sale to attract a good customer response. Consumers expect at least 3-4 days for the shelf life of purchased cut flowers. Consumers are displeased when they bring home cut flowers, unwrap and place them in fresh water, only to have them unrecoverably wilt and/or turn brown on the first or second day.

Irrespective of the means used to prolong the useful life of harvested flowers, they inevitably will wilt, fade in color, and often turn brown. The time period before such wilting occurs is widely variable. It depends in part upon the variety of flower, the length of time since it was originally cut, the type of transport and storage employed between cutting and use, and the ambient conditions to which is subjected during transport and display. While cold temperatures are known to extend the life of cut flowers, most people's homes are not kept sufficiently cold to optimize the life of cut flowers while they are on display. Also, for flower wholesalers and vendors, commercial refrigeration is expensive. Frequent changing of the water into which cut flowers are placed, frequent making of fresh cuts in the stems, and the adding of chemical preservatives to the water in which freshly cut flowers are placed, are other commonly used ways in which to extend the life of cut flowers. However, each of these methods of cut flower preservation is either labor intensive or expensive, or both, and none extends the viability of the cut flowers for more than a few days.

Many attempts have been made in the past to provide methods for preserving cut flowers so that they retain their attractiveness for a much a longer period of time. A well-known method that can be used to preserve certain types of cut flowers, is drying. However, the dried flowers so obtained are clearly distinguishable from fresh cut flowers and far less attractive.

Alternative, more sophisticated preservation methods have also been described. US 4,287,222, for instance, describes a method of processing cut plant material comprising:
- immersing the plant material to be processed in a liquid treatment agent comprising a polyol or mixtures thereof and having a specific gravity within the range of 1.10 to 1.16,
- subjecting the immersed plant material to a pressure within the range of 5 psi to 40 psi (34-276 KPa) under ambient temperature for a time interval of between 2 to 7 days for absorption of the agent in the material,
- withdrawing the plant material from the pressurized immersed state, and
- permitting the withdrawn plant material to dry under ambient pressure and temperature.

EP-A 1 106 343 describes a treatment method for preserving cut flowers, which has a dehydration process for removing the tissue water of cut flowers using a solvent, and a permeation process for letting polyethylene glycol permeate after dehydration, to substitute the solvent by polyethylene glycol. The only solvent mentioned is acetone.

US 6,365,548 describes a method for preserving cut flowers, which includes a dehydration process for removing tissue water of cut flowers using a solvent, and a permeation process in which polyethylene glycol permeates said flowers after dehydration, whereby to substitute polyethylene glycol for the solvent in the cut flowers, and wherein the dehydration process is effected while the cut flowers are held in a container having therein a proper quantity of molecular sieve for adsorption of water, said container also having therein a solvent with a specific gravity smaller than that of water, the method comprising:
(a) monitoring the change of dehydratability of said solvent during the progression of dehydration by incessantly measuring the specific gravity of the solvent, for detecting the time for exchanging the molecular sieve, and
(b) replacing said molecular sieve with a fresh molecular sieve substantially free of water when the total quantity of dissolved water in the solvent as determined by the specific gravity measurements exceed the water adsorbability of the molecular sieve.

US 2007/0089363 describes a process to preserve natural flowers, comprising: selecting and cutting the flowers, immersing the stems in water, and then separating the each flower from its stem; dehydrating the flowers in three successive dehydration steps using an extraction solvent that is miscible in water (e.g. alcohol), followed by an infiltration step wherein flowers are immersed into a bath comprising a blend of colorants, a solvent of the same characteristics as those used in the dehydration steps, a polymer soluble in said colorants and solvent; and finally an evaporation step.

WO2009/098653 describes a method for preserving and/or dyeing plant material, the method comprising the steps of removing the bulk of the natural wax material from the plant material and subjecting the plant material to a bleaching and/or a preservation agent. The preservation agent comprises a humectant component and a solvent component. The humectant component is selected from sugars, polyols, polyol-esters, amines and quaternary ammonium compounds and salts of strong and/or weak inorganic and/or organic acids. The solvent component is selected from water, alcohols including ethanol, n-propanol, iso-propyl alcohol, n-butanol, tert-butanol, petroleum ethers and iso-parrafins. The preservation solution is preferably pressurized with an inert gas to increase the rate of uptake. The inert gas may be selected from either nitrogen and/or carbon dioxide and preferred pressures vary between 51-203 KPa (0.5-2.0 atm) of pressure.

The aforementioned preservation methods rely on the use of an liquid organic preservation component (e.g. glycerol or polyethylene glycol) to replace the water that is naturally present in the plant material. This replacement assists in maintaining the fresh appearance of the plant material and also contributes to retaining the turgor pressure within the plant material. The turgor pressure contributes significantly to the rigidity and mechanical stability of non- lignified plan tissues (e.g. flower petals, leaves).

The aforementioned preservation methods that employ a liquid organic preservation component suffer from the drawback that they are very time consuming, that they are very laborious and/or that only a limited fraction of the water is replaced by the preservation component.

### SUMMARY OF THE INVENTION

The present inventors have developed a very effective method for preserving fresh ornamental plant parts, such as cut flowers. The present method can be used to prepare preserved ornamental plant parts having a very natural, fresh appearance. These preserved ornamental plant parts retain their attractive appearance for several weeks or even for several months, without the need of any special attention or care. The preservation method of the present invention can advantageously be used to preserve very vulnerable ornamental plant parts (e.g. Gerbera flowers) that cannot be preserved by conventional preservation methods.

The preservation method of the present invention comprises:
(i) contacting ornamental plant parts with a preservation medium containing 0.5-97 wt.% of liquefied or supercritical solvent, 1-50 wt.% of polyethylene glycol, and 0-92 wt.% of co-solvent, the combination of the solvent, polyethylene glycol and the optional co-solvent representing at least 80 wt.% of the preservation medium; said medium having a pressure of at least 3 MPa (30 bar); and
(ii) recovering the preserved ornamental plant parts.

The preserved plant parts can be recovered by reducing the pressure to ambient pressure.

The present method offers the advantage that the use a liquefied or supercritical solvent at a pressure of at least 3 MPa (30 bar) enables very efficient substitution of water contained within the plant parts by the polyethylene glycol and without significant detrimental effect on the appearance and mechanical properties of the plant parts. Although the inventors do not wish to be bound by theory, it is believed that in the present method the preservation medium readily enters the plant parts to replace at least a part of the water contained therein. The water that is extracted from the plant parts can be removed from the preservation medium during the contacting with the medium and the plant parts, e.g. by contacting the preservation medium with a water-absorbent. When the pressure is reduced to ambient pressure, preserved plant parts are obtained in which a significant part of the water has been replaced by polyethylene glycol.

The present method also offers the advantage that little or no shrinkage occurs even though the weight loss induced by the process may be as high as 80%. Furthermore, the treatment effectively sterilizes the plant parts, thereby contributing to the overall effectiveness of the preservation.

The use of liquefied or supercritical gas to dehydrate pieces of intact plant tissue is known from WO 2005/122776. This international patent application describes a method of dehydrating pieces of intact plant or animal tissue, the method comprising:
- contacting the pieces of intact tissue with a pressurized gas to reduce the water content of the pieces by at least 50%, said pressurized gas having a pressure of at least 0.5xP_{c}, and a temperature of at least T_{c}-60 °C, P_{c} representing the critical pressure of the gas and T_{c} representing the critical temperature of the gas, and
- separating the pressurized gas from the dehydrated pieces,
wherein at least 80 wt.% of the matter removed by the pressurized gas from the pieces of intact plant or animal tissue is water.

The use of supercritical fluid to treat wood with insecticide is described in US 6,638,574. The supercritical fluid may contain a co-solvent such as methanol.

The present invention also pertains to a preserved cut flower having a fresh appearance, said preserved cut flower having a water content of less than 45 wt.% and containing at least 5 wt.% of polyethylene glycol.

### DETAILED DESCRIPTION OF THE INVENTION

A first aspect of the present invention relates to a method of preserving ornamental plant parts having a water content of more than 20 wt.%, said method comprising:
- contacting the ornamental plant parts with a preservation medium containing 0.5-97 wt.% of liquefied or supercritical solvent, 1-50 wt.% of polyethylene glycol, and 0-92 wt.% of co-solvent, the combination of the solvent, polyethylene glycol and the optional co-solvent representing at least 80 wt.% of the preservation medium; said medium having a pressure of at least 3 MPa (30 bar); and
- recovering the preserved ornamental plant parts.

The term "ornamental plant parts" as used herein refers to parts of plants that have ornamental qualities that allow these plant parts to be used for decorative purposes. Examples of ornamental plant parts include cut flowers, twigs, petals, leafs and combinations thereof.

The term "liquefied solvent" as used herein refers to a substance that is contained in the preservation medium in a liquid state, but that is a gas under ambient conditions (101 KPa = 1 atm, 20°C).

The term "supercritical solvent" as used herein refers to a substance that is contained in the preservation medium in a supercritical state, but that is a gas under ambient conditions (101 KPa = 1 atm, 20°C).

The preservation method of the present invention can suitably be employed to preserve different types of ornamental plant parts. The benefits of the present invention are particularly appreciated if the method is employed to preserve plant parts selected from cut flowers, flower petals, stems, twigs, foliage, leaves and combinations thereof. According to a particularly preferred embodiment the plant parts are selected from cut flower, flower petals and combinations thereof. Most preferably, the plant parts employed in the present method are cut flowers (with or without stem).

Typical examples of flowers that may suitably be preserved by the present method include: *Gerbera, Chrysanthemum, Anthurium, Calla, Zantedeschia, Lilium, Phalaenopsis, Alstromeria, Gladiolus, Strelitzia, Celosia* and *Rosa.*

The present method may also advantageously be used to preserve foliage that is used in flower arrangements. Examples of such foliage include: *Aspidistra, Ruscus, Hedera, Gaultheria* (*salal*), *Crassula ovate.*

The present method may suitably be employed to treat freshly harvested ornamental plant parts. However, it is equally feasible to use the method to preserve ornamental plant parts that have undergone some form of pretreatment, such as pre-drying.

Typically, the ornamental plant parts that are preserved by the present method have a water content at the start of the preservation process of at least 30 wt.%. Preferably, the ornamental plant parts have a water content at the start of the preservation process of at least 50 wt.%, more preferably in the range of 55-92 wt.%, even more preferably of 70-91 wt.% and most preferably of 75-90 wt.%.

Advantageously, the present method is employed to remove a substantial fraction of the water that is contained in the fresh plant parts. Typically, at least 60%, more preferably at least 65%, even more preferably at least 70% and most preferably 75-99% of the water contained in the fresh plant parts is removed by the present method.

The preserved ornamental plant parts obtained by the present method typically have a water content of less than 45 wt.%, more preferably of 4-35 wt.% and most preferably of 5-25 wt.%.

The amount of polyethylene glycol that is introduced into the plant parts by the present method typically is at least 3%, more preferably 4-60%, more preferably 5-55% and most preferably 8-50% by weight of the preserved ornamental plant parts.

The preserved ornamental plant parts obtained by the present method typically contain polyethylene glycol in a concentration of at least 4%, more preferably of at least 6% and most preferably of at least 10% by weight of the dry matter contained in the preserved plant parts. Typically, the amount of polyethylene glycol does not exceed 80% by weight of the dry matter contained in the preserved plant parts.

The weight of the ornamental plant parts is typically reduced by at least 50% by the present method as the amount of water that is removed by the method substantially exceeds the amount of polyethylene glycol that is introduced by the same method. Typically, the weight of the plant parts is reduced by at least 55%, more preferably at least 60% and most preferably by at least 65% by the present method.

The liquefied or supercritical solvent that is contained in the preservation medium typically comprises at least 0.6 wt.%, more preferably 0.8-40 wt.%, even more preferably 0.9-20 wt.% and most preferably 1-10 wt.% of substances that are in a gaseous state at atmospheric pressure and a temperature of 20°C.

According to another preferred embodiment, the solvent contains at least 0.5 wt.%, more preferably 0.8-40 wt.%, even more preferably 0.9-20 wt.% and most preferably 1-10 wt.% of one or more gaseous substances selected from carbon dioxide, nitrogen and combinations thereof. Most preferably, the solvent contains at least 0.5 wt.%, more preferably 0.8-40 wt.%, even more preferably 0.9-20 wt.% and most preferably 1-10 wt.% of carbon dioxide.

The contact time between the plant parts and the preservation medium as defined herein typically lies in the range of 5-200 minutes. More preferably, said contact time lies in the range of 15-120 minutes, most preferably in the range of 35-90 minutes.

The preservation medium employed in the present method preferably has a pressure of 4-30 MPa (40-300 bar) and a temperature of 5-70°C. More preferably, the pressure of the preservation medium is in the range of 5-20 MPa (50-200 bar), most preferably of 7-19 MPa (70-190 bar). The temperature of the preservation medium preferably is in the range of 35-60°C, most preferably of 40-50°C.

In accordance with a particularly preferred embodiment of the present invention, the solvent contained in the preservation medium is in a supercritical state. The use of a solvent in supercritical state enables very effective dehydration and simultaneous impregnation with polyethylene glycol.

Polyethylene glycol may be present in the preservation medium in dissolved and/or undissolved form. Typically, the preservation medium contains 1-50 wt.% of dissolved polyethylene glycol.

Polyethylene glycol preferably is a liquid under ambient conditions (20°C, 101 KPa = 1 atm).

The polyethylene glycol employed in the present method preferably contains 2-34, more preferably 2-20 and most preferably 2-11 ethylene oxide units. The molecular weight of the polyethylene glycol typically lies in the range of 62-1500 g/mol. More preferably, said molecular weight is in the range of 62-800 g/mol, most preferably in the range of 62-500 g/mol.

The co-solvent that is an optional component of the preservation medium preferably is a C₁₋₈ monohydric aliphatic alcohol. Naturally, also mixtures of these aliphatic alcohols may be employed.

According to a particularly advantageous embodiment of the present invention, the solvent contains 30-90 wt.%, more preferably 50-85 wt.% and most preferably 60-80 wt.% of a co- solvent selected from C₁₋₈ monohydric aliphatic alcohols and combinations thereof. The use of such a co-solvent offers the advantage that the polyethylene glycol can be included in the preservation medium in very high concentrations. Also, the co-solvent can improve the water- extraction capability of the preservation medium.

The co-solvent employed in the present method preferably is selected from C₁₋₄ monohydric aliphatic alcohols, more preferably from C₁₋₃ monohydric aliphatic alcohols, even more preferably from methanol, ethanol and combinations thereof. Most preferably, the co-solvent is ethanol.

Particularly good results can be achieved with the present preservation method if the co- solvent and the polyethylene glycol are miscible under the conditions employed during the contacting of the plant parts and the preservation medium, i.e. under these conditions the two components are liquid and can be mixed in all proportions, forming a homogeneous solution.

The co-solvent and polyethylene glycol are typically contained in the preservation medium in a weight ratio of 100:1 to 1:3, more preferably in a weight ratio of 10:1 to 1:2, and most preferably in a weight ratio of 4:1 to 1:1.

It is further preferred to employ a preservation medium that comprises the liquefied or supercritical solvent, polyethylene glycol and the co-solvent, wherein the solubility of polyethylene glycol in the co-solvent at the temperature employed during the contacting of the ornamental plant parts with the preservation medium exceeds 200 g/l, more preferably exceeds 400 g/l and most preferably exceeds 500 g/l; and wherein the solubility of polyethylene glycol in carbon dioxide at the temperature and pressure employed during the contacting of the ornamental plant parts with the preservation medium is less than 50 g/l, more preferably less than 20 g/l and most preferably less than 10 g/l.

In accordance with a preferred embodiment of the present method the preservation medium contains 0.5-40 wt.% of the liquefied or supercritical solvent, 1-50 wt.% of polyethylene glycol and 40-85 wt.% of the co-solvent. Even more preferably, the preservation medium contains 1-20 wt.% of the liquefied or supercritical solvent, 5-30 wt.% of polyethylene glycol and 60-80 wt.% of the co-solvent. Typically, the solvent, polyethylene glycol and the co-solvent together represent at least 85 wt.%, more preferably at least 90 wt.% and most preferably at least 97 wt.% of the preservation medium.

The preserved ornamental plant parts can be recovered from the present process by depressurizing the vessel in which the contacting with the preservation medium takes place and by removing the preserved ornamental plant parts therefrom. In case the preservation medium employed contained a co-solvent, residual co-solvent may be removed from the preserved plant parts by leaving the plant parts in the open air, especially if the co-solvent is a volatile substance, e.g. methanol or ethanol. Removal of the residual co-solvent may be aided by applying vacuum and/or by elevating temperature, e.g. to up to 35°C. The evaporated co-solvent is suitably condensed and re-used.

In accordance with another preferred embodiment, the preservation medium employed in the present method contains a dye, preferably reactive dye. The inventors have discovered that the preservation medium not only is capable of effectively impregnating the plant parts with polyethylene glycol, but also that it can be used to dye the plant parts. Thus, the present method can suitably be used to simultaneously preserve and dye plant parts. Dyeing may be advantageous in those cases where the preservation method causes colour changes in the plant parts. These colour changes may be negated by dyeing the plant parts using the present method.

The efficiency of the preservation method of the present invention can be maximized by removing water from the preservation medium during the contacting with the ornamental plant parts and/or by replacing at least a part of the preservation medium with preservation medium having a lower water content during said contacting. This may be achieved, for instance, by contacting the preservation medium with a water-absorbent or a water-adsorbent during the contacting with the plant parts, e.g. by recirculating the preservation medium across a water-absorbent or water-adsorbent material. Examples of materials that can suitable be used to dry the preservation medium include zeolites and ionic liquids.

In an advantageous embodiment of the present method, prior to the contacting of the fresh plant parts with the preservation medium said plant parts are subjected to one or more pre-treatment steps to enhance the mechanical strength of the preserved plant parts that are obtained by the present method. According to a particularly preferred embodiment, the pretreatment of the fresh plant parts comprises introducing an aqueous biopolymer solution into these plant parts. Subsequently, the plant parts are subjected to the preservation method described herein and the water removal that occurs during this method causes the biopolymer to form a gel-structure within the xylem, thereby providing rigidity to the plant part.

The (non-gelled) aqueous biopolymer solution can suitably be introduced into the xylem of the plant parts by contacting a cut surface, e.g. a cut surface of the stem of a fresh cut flower, with the aqueous biopolymer solution. Alternatively, the aqueous biopolymer solution may be introduced into the plant parts by means of injection. Injection is particularly suited for introducing anionic polysaccharides such as alginate and/or pectin.

The biopolymer may also be caused to gel by other means than dehydration. For instance, anionic polysaccharides such as pectin or alginate can be transformed into gels by infusion with multivalent metal cations, such as Ca²⁺ and Mg²⁺. This infusion preferably occurs before the plant parts are subjected to the preservation method.

Examples of biopolymers that can suitably be employed in the pretreatment of the plant parts include polysaccharides and proteins. Most preferably, the biopolymer is a polysaccharide biopolymer, Examples of polysaccharide biopolymers that can be employed include starches (including native and modified starches), glycogen, chitin, polysaccharides with carboxylic groups (e.g. alginates, pectin, rosin gum, xanthan gum), arabinoxylans and combinations thereof. Preferably, the polysaccharide biopolymer is selected from starches, alginate, glycogens, chitin and combinations thereof. Most preferably, the polysaccharide biopolymer is selected from starches, alginate, chitin, and combinations thereof.

Typically, the biopolymer solution contains 0.1-5 wt.%, more preferably 0.3-4 wt.% and most preferably 0.5-3 wt.% of the biopolymer. The biopolymer is typically introduced into the plant parts in an amount of at least 10 mg per kg of dry matter, more preferably of at least 50 mg per kg of dry matter and most preferably 500-30,000 mg per kg of dry matter.

The aqueous biopolymer solution is suitably introduced into the plant parts by partially or completely immersing the plant parts in said biopolymer solution. In case of cut flowers it is preferred to immerse the stems, but not the flower petals, in the biopolymer solution. Thus, efficient uptake of the biopolymer solution is achieved and no biopolymer deposits are formed onto the flower petals. Typically, the plant parts are partly or completely immersed in the biopolymer solution for at least 5 minutes, more preferably for 0.3-24 hours and most preferably for 1-5 hours. The temperature of the biopolymer solution typically is in the range of 2-30°C, more preferably in the range of 16-25°C when the plant parts are immersed therein.

Infusion with multivalent cations to induce gelation of anionic polysaccharide that has been introduced within the xylem of the plant parts can suitably be achieved by partly or completely immersing the plant parts in a solution of these multivalent cations or by injecting such a gelation solution into the plant parts. Preferably, this gelation solution is an aqueous solution. Even more preferably, the gelation solution is an aqueous solution containing 5-200 mmol/l, more preferably 10-80 mmol/l of dissolved cations selected from Ca²⁺, Mg²⁺ and combinations thereof. The aqueous solution of multivalent cations is preferably introduced into cut flowers by immersing the stems, and not the flower petals, into the aqueous solution.

Another aspect of the present invention relates to a preserved cut flower that is obtained by the preservation method described herein, said preserved cut flower having a water content of less than 45 wt.% and containing at least 5 wt.% of polyethylene glycol.

The present invention enables the preservation of flowers with a high water content of more than 75 wt.% that cannot be preserved using know preservation methods. Examples of flowers with a very high water content that can suitably be preserved by the present method include *Gerbera, Phalaneopsis, Alstroemeria, Lilium, Chrysanthemum, Zantedeschia (Calla)* and *Tulipa..* Accordingly, the preserved cut flower of the present invention preferably is a flower selected from *Gerbera, Phalaneopsis, Alstroemeria, Lilium, Chrysanthemum, Zantedeschia* and *Tulipa.*

According to a preferred embodiment, the cut flower is impregnated with biopolymer, more particularly polysaccharide. Examples of biopolymers that may suitably be employed include starches (including native and modified starches), glycogen, chitin, polysaccharides with carboxylic groups (e.g. alginate, pectin, rosin gum, xanthan gum), arabinoxylans and combinations thereof. More preferably, the biopolymer is selected from the group of starch, alginate, chitin and combinations thereof.

According to a particularly preferred embodiment, the cut flower is impregnated with (i) anionic polysaccharide selected from alginate, pectin and combinations thereof and (ii) one or more biopolymers selected from starches, glycogen, rosin gum and xanthan gum, arabinoxylans

The preserved flower of the present invention typically contains traces of the co-solvent as defined herein before. Typically, the co-solvent is contained in the preserved flower in a concentration that exceeds 10 ppm, more particularly exceeds 100 ppm. Typically this concentration does not exceed 1 wt.%.

The invention is further illustrated by the following non-limiting examples.

### EXAMPLES

### Example 1A

### Preservation of orchids without pretreatment

An autoclave was filled with 500g of a preservation mixture comprising PEG 400 and ethanol (weight ratio 1 :3). Subsequently, 0.1% yellow reactive dye (2-[2-[(4- methoxyphenyl)amino]vinyl]-1.3-trimethyl-3H-indolium chloride (CAS no:25717-55-9)) was dissolved into the preservation mixture.

Two freshly cut orchid flowers (*phalaneopsis*) were immersed into the preservation mixture and carbon dioxide was added to create a preservation medium having a pressure of 15 MPa (150 bar) and a temperature of 40°C. The preservation medium contained approximately 4 wt.% supercritical carbon dioxide. The preservation medium was kept at 150 bar and 40°C for 1 hour, after which the autoclave was gradually depressurized in 30 minutes. After depressurization the flowers were taken out of the autoclave and left for a couple of hours at ambient conditions.

The preserved flowers so obtained were kept under room conditions for 2 months without any degradation or molding being observed.

Table 1 depicts the composition of the Orchids flowers before and after the preservation treatment.

**Table 1**

| | Fresh | Preserved |
|---|---|---|
| Water content (wt.%) | 80-90 | <10 |
| PEG content (wt.%) | 0 | 5-15 |

### Example IB

### Preservation of orchids with starch pretreatment

Example 1A was repeated, except that this time the orchid flowers were subjected to a pretreatment before being immersed in the preservation mixture. The pretreatment consisted of putting the stems of the freshly cut orchid flowers into an aqueous solution containing 2.65% white or yellow potato starch and leaving the stems in the starch solution overnight.

The appearance of the preserved orchids so obtained was similar to that of the orchids of Example 1 A. Also these preserved flowers were kept under room conditions for 2 months without any degradation or molding being observed. In comparison to the preserved flowers of Example 1 A, these flowers were found to be mechanically more robust.

Table 2 depicts the composition of the Orchids flowers before and after the preservation treatment.

**Table 2**

| | Fresh | Preserved |
|---|---|---|
| Water content (wt.%) | 70-90 | <10 |
| PEG content (wt.%) | 0 | 5-15 |
| Starch (wt.%) | 0 | 0.001-0.02 |

### Example 2A

### Preservation of roses without pre-treatment

An autoclave was filled with 500g of a preservation mixture comprising PEG 400 and ethanol (weight ratio 1 :3). Subsequently, 0.1% yellow reactive dye (2-[2-[(4- methoxyphenyl)amino]vinyl]-1.3-trimethyl-3H-indolium chloride (CAS no:25717-55-9)) was dissolved into the preservation mixture.

Two freshly cut roses (Avalanche) were immersed into the preservation mixture and carbon dioxide was added to create a preservation medium having a pressure of 18 MPa (180 bar) and a temperature of 40°C. The preservation medium contained approximately 5 wt.% supercritical carbon dioxide. The preservation medium was kept at 18 MPa (180 bar) and 40°C for 1 hour, after which the autoclave was gradually depressurized in 30 minutes. After depressurization the flowers were taken out of the autoclave and left for a couple of hours at ambient conditions.

The preserved flowers so obtained were found to keep their attractive appearance over a period of more than 4 months.

Table 3 depicts the composition of the rose flowers before and after the preservation treatment.

**Table 3**

| | Fresh | Preserved |
|---|---|---|
| Water content (wt.%) | 70-90 | 12-15 |
| PEG content (wt.%) | 0 | 20-25 |

### Example 2B

### Preservation of roses with starch and alginate pre-treatment

Example 2A was repeated, except that this time the rose flowers were subjected to a pretreatment before being immersed in the preservation mixture. The pretreatment consisted of:
- putting the stems of the freshly cut roses into an aqueous solution containing 2.65% white or yellow potato starch and leaving the stems in eh starch solution overnight
- injecting an aqueous alginate solution (1.5 wt%) directly into the receptacle
- a couple of minutes after the injection, immersing the stems almost completely into an aqueous CaCl₂ solution (0.71 wt.%) for 2 hours

The preserved flowers so obtained were found to keep their attractive appearance over a period of more than 4 months. Also these preserved flowers were mechanically more robust that the flowers of Example 2A.

Table 4 depicts the composition of the Rose flowers before and after the preservation treatment.

**Table 4**

| | Fresh | Preserved |
|---|---|---|
| Water content (wt.%) | 70-90 | 12-15 |
| PEG content (wt.%) | 0 | 20-25 |
| Alginate (wt%) | 0 | 0.2-2.5 |
| Starch (wt%) | 0 | 0.001-0.02 |

### Example 3A

### Preservation of Gerbera flowers without pretreatment

An autoclave was filled with 500g of a preservation mixture comprising PEG 400 and ethanol (weight ratio 1 :3). Subsequently, 0.1% yellow reactive dye (2-[2-[(4- methoxyphenyl)amino]vinyl]-1.3-trimethyl-3H-indolium chloride (CAS no:25717-55-9)) was dissolved into the preservation mixture.

Two freshly cut Gerbera flowers were immersed into the preservation mixture and carbon dioxide was added to create a preservation medium having a pressure of 18 MPa (180 bar) and a temperature of 40°C. The preservation medium contained approximately 5 wt.% supercritical carbon dioxide. The preservation medium was kept at 180 bar and 40°C for 1 hour, after which the autoclave was gradually depressurized in 30 minutes. After depressurization the flowers were taken out of the autoclave and left for a couple of hours at ambient conditions.

The preserved Gerbera flowers so obtained had an attractive appearance, be it that over time the petals showed a tendency to curve inside.

Table 5 depicts the composition of the Gerbera flowers before and after the preservation treatment.

**Table 5**

| | Fresh | Preserved |
|---|---|---|
| Water content (wt.%) | 70-90 | 12-15 |
| PEG content (wt.%) | 0 | 20-25 |

### Example 3B

### Preservation of Gerbera flowers with starch pretreatment

Example 3 A was repeated, except that this time the Gerbera flowers were subjected to a pretreatment before being immersed in the preservation mixture. The pretreatment consisted of putting the stems of the freshly cut Gerbera flowers into an aqueous solution containing 2.65% white or yellow potato starch and leaving the stems in the starch solution overnight.

The preserved Gerbera flowers so obtained had an attractive appearance, but were mechanically not very robust, i.e. the flower petals came off quite easily.

Table 6 depicts the composition of the Gerbera flowers before and after the preservation treatment.

**Table 6**

| | Fresh | Preserved |
|---|---|---|
| Water content (wt.%) | 70-90 | 12-15 |
| PEG content (wt.%) | 0 | 20-25 |
| Starch (wt%) | 0 | 0.001-0.02 |

### Example 3C

### Preservation of Gerbera flowers with starch and alginate pretreatment

Example 2A was repeated, except that this time the Gerbera flowers were subjected to a pretreatment before being immersed in the preservation mixture. The pretreatment consisted of:
- putting the stems of the freshly cut flowers into an aqueous solution containing 2.65% white or yellow potato starch and leaving the stems in eh starch solution overnight
- injecting an aqueous alginate solution (1.5 wt%) directly into the receptacle
- a couple of minutes after the injection, immersing the were almost completely into an aqueous CaCl₂ solution (0.71 wt.%) for 2 hours

The preserved Gerbera flowers so obtained had an appearance that was very similar to that of fresh Gerbera flowers. Also, these Gerbera flowers were mechanically more robust than the Gerbera flowers of Examples 3A and 3B.

A bouquet of the preserved Gerbera flowers was put into a vase (without vase water). After 4 months under ambient conditions the bouquet still had a fresh, appealing appearance.

Table 7 depicts the composition of the Gerbera flowers before and after the preservation treatment.

**Table 7**

| | Fresh | Preserved |
|---|---|---|
| Water content (wt.%) | 70-90 | 12-15 |
| PEG content (wt.%) | 0 | 20-25 |
| Alginate (wt.%) | 0 | 0.2-2.5 |
| Starch (wt.%) | 0 | 0.001-0.02 |

### Example 4

### Preservation of pre-dried roses

Five red roses (Naomi) that had been pre-dried in ethanol, and having a total dry mass of 73.3 g, were impregnated with PEG 400, using an autoclave (6,000 ml) filled with liquefied CO₂ ethanol, PEG 400 (weight ratio 95:3 :2) and a small amount of reactive red dye. The preservation medium had a pressure of 18 MPa (180 bar) and a temperature of 40°C and the duration of the impregnation treatment was 40 minutes.

Immediately after removal from the autoclave, the impregnated roses had a weight of 154.8 g. Half an hour later the weight of the roses had reduced to 128.4 g due to ethanol evaporation. The rose petals kept their 'fresh' appearance for at least 3 months.

## Claims

1. A method of preserving ornamental plant parts having a water content of more than 20 wt.%, said method comprising:
• contacting the ornamental plant parts with a preservation medium containing 0.5-97 wt.% of liquefied or supercritical solvent, 1-50 wt.% of polyethylene glycol, and 0-92 wt.% of co-solvent, the combination of solvent, polyethylene glycol and optional co-solvent representing at least 80 wt.% of the preservation medium; said medium having a pressure of at least 30 bar; and
• recovering the preserved ornamental plant parts.

2. Method according to claim 1, wherein the ornamental plant parts are selected from cut flowers, flower petals, twigs, foliage, leaves and combinations thereof.

3. Method according to claim 1, wherein the preservation medium contains at least 0.5 wt.% of supercritical solvent.

4. Method according to any one of the preceding claims, wherein the solvent contains at least 20 wt.% of one or more substances selected from carbon dioxide, nitrogen and combinations thereof.

5. Method according to any one of the preceding claims, wherein the preservation medium contains 30-90 wt.% of a co-solvent selected from C₁₋₈ monohydric aliphatic alcohols and combinations thereof.

6. Method according to claim 5, wherein the co-solvent and the polyethylene glycol are contained in the preservation medium in a weight ratio of 100:1 to 1:3.

7. Method according to claim 5 or 6, wherein the preservation medium contains 0.5-40 wt.% of the liquefied or supercritical solvent, 1-50 wt.% of the polyethylene glycol and 40-85 wt.% of the co-solvent.

8. Method according to any one of the preceding claims, wherein water is removed from the preservation medium during the contacting with the ornamental plant parts or wherein at least a part of the preservation medium is replaced with preservation medium having a lower water content during said contacting.

9. Method according to any one of the preceding claims, wherein the preservation medium has a pressure of 4-30 MPa (40-300 bar) and a temperature of 5-70°C.

10. Method according to claim 9, wherein the preservation medium has a pressure of 5-20 MPa (50-200 bar).

11. A method according to any one of the preceding claims, wherein prior to the contacting of the fresh plant parts with the preservation medium an aqueous biopolymer solution is introduced into the xylem of these fresh plant parts.

12. A preserved cut flower obtained by a method according to any one of claims 1-110, said preserved cut flower having a water content of less than 45 wt.% and containing at least 5 wt.% of polyethylene glycol.

13. Preserved cut flower according to claim 12, wherein the cut flower is impregnated with biopolymer selected from the group of starch, alginate, chitin and combinations thereof.

14. Preserved cut flower according to claim 12 or 13 wherein the flower is selected from *Gerbera, Phalaneopsis, Alstroemeria, Lilium, Chrysanthemum, Zantedeschia* and *Tulipa.*

## Patentansprüche

1. Ein Verfahren zur Konservierung von Zierpflanzenteilen mit einem Wassergehalt von mehr als 20 Gew .-%, wobei das Verfahren umfasst:
• Kontaktieren der Zierpflanzenteile mit einem Konservierungsmedium, das 0,5-97 Gew.-% verflüssigtes oder überkritisches Lösungsmittel, 1-50 Gew.-% Polyethylenglykol und 0-92 Gew.-% an Co-Lösungsmittel enthält, wobei die Kombination von Lösungsmittel, Polyethylenglykol und optionalem Co-Lösungsmittel mindestens 80 Gew.-% des Konservierungsmediums darstellt; wobei das Medium einen Druck von mindestens 30 bar aufweist; und
• sammeln der konsevierten Zierpflanzenteile.

2. Verfahren nach Anspruch 1, wobei die Zierpflanzenteile ausgewählt sind aus Schnittblumen, Blütenblättern, Ästchen, Laubwerk, Blättern und Kombinationen davon.

3. Verfahren nach Anspruch 1, **dadurch gekennzeichnet, dass** das Konservierungsmedium mindestens 0,5 Gew.-% superkritisches Lösungsmittel enthält.

4. Verfahren nach einem der vorhergehenden Ansprüche, wobei das Lösungsmittel mindestens 20 Gew.-% eine oder mehrere Substanzen enthält, die ausgewählt sind aus Kohlendioxid, Stickstoff und Kombinationen davon.

5. Verfahren nach einem der vorhergehenden Ansprüche, wobei das Konservierungsmedium 30-90 Gew.-% eines Co-Lösungsmittels enthält, das ausgewählt ist aus C₁₋₈ einwertigen aliphatischen Alkoholen und Kombinationen davon.

6. Verfahren nach Anspruch 5, wobei das Co-Lösungsmittel und das Polyethylenglykol im Konservierungsmedium in einem Gewichtsverhältnis von 100:1 bis 1:3 enthalten sind.

7. Verfahren nach Anspruch 5 oder 6, wobei das Konservierungsmedium 0,5-40 Gew.-% des verflüssigten oder überkritischen Lösungsmittels, 1-50 Gew.-% des Polyethylenglykols und 40-85 Gew.-% des Co-Lösungsmittels enthält.

8. Verfahren nach einem der vorhergehenden Ansprüche, bei dem Wasser während des Kontaktierens mit den Zierpflanzenteilen aus dem Konservierungsmedium entfernt wird oder wobei mindestens ein Teil des Konservierungsmediums durch Konservierungsmedium mit einem geringeren Wassergehalt während des Kontaktierens ersetzt wird.

9. Verfahren nach einem der vorhergehenden Ansprüche, wobei das Konservierungsmedium einen Druck von 4-30 MPa (40-300 bar) und eine Temperatur von 5-70 °C aufweist.

10. Verfahren nach Anspruch 9, wobei das Konservierungsmedium einen Druck von 5-20 MPa (50-200 bar) aufweist.

11. Ein Verfahren nach einem der vorhergehenden Ansprüche, wobei vordem Kontaktieren der frischen Pflanzenteile mit dem Konservierungsmedium eine wässrige Biopolymerlösung in das Xylem dieser frischen Pflanzenteile eingebracht wird.

12. Eine konservierte Schnittblume, die durch ein Verfahren nach einem der Ansprüche 1-11 erhalten wird, wobei die konservierte Schnittblume einen Wassergehalt von weniger als 45 Gew.-% aufweist und mindestens 5 Gew.-% Polyethylenglykol enthält.

13. Konservierte Schnittblume nach Anspruch 12, wobei die Schnittblume mit einem Biopolymer imprägniert ist, das ausgewählt ist aus der Gruppe von Stärke, Alginat, Chitin und Kombinationen davon.

14. Konservierte Schnittblume nach Anspruch 12 oder 13, wobei die Blume ausgewählt ist aus *Gerbera, Phalaenopsis, Alstroemeria, Lilium, Chrysanthemum, Zantedeschia* und *Tulipa.*

## Revendications

1. Méthode de préservation de parties de plante ornementale ayant une teneur en eau supérieure à 20 % en poids, ladite méthode comprenant les étapes consistant à :
• mettre en contact les parties de plante ornementale avec un milieu de préservation contenant de 0,5 à 97 % en poids de solvant liquéfié ou supercritique, de 1 à 50 % en poids de polyéthylène glycol, et de 0 à 92 % en poids de co-solvant, la combinaison du solvant, du polyéthylène glycol et du co-solvant facultatif représentant au moins 80 % en poids du milieu de préservation ; ledit milieu ayant une pression d'au moins 30 bars ; et
• récupérer les parties de plante ornementale préservées.

2. Méthode selon la revendication 1, dans laquelle les parties de plante ornementale sont choisies parmi des fleurs coupées, des pétales de fleurs, des brindilles, un feuillage, des feuilles et des combinaisons de ceux-ci.

3. Méthode selon la revendication 1, dans laquelle le milieu de préservation contient au moins 0,5 % en poids de solvant supercritique.

4. Méthode selon l'une quelconque des revendications précédentes, dans laquelle le solvant contient au moins 20 % en poids d'une ou plusieurs substances choisies parmi le dioxyde de carbone, l'azote et des combinaisons de ceux-ci.

5. Méthode selon l'une quelconque des revendications précédentes, dans laquelle le milieu de préservation contient de 30 à 90 % en poids d'un co-solvant choisi parmi des alcools aliphatiques monohydriques en C₁₋₈, et des combinaisons de ceux-ci.

6. Méthode selon la revendication 5, dans laquelle le co-solvant et le polyéthylène glycol sont contenus dans le milieu de préservation selon un rapport de poids de 100:1 à 1:3.

7. Méthode selon la revendication 5 ou 6, dans laquelle le milieu de préservation contient de 0,5 à 40 % en poids du solvant liquéfié ou supercritique, de 1 à 50 % en poids de polyéthylène glycol et de 40 à 85 % en poids du co-solvant.

8. Méthode selon l'une quelconque des revendications précédentes, dans laquelle l'eau est éliminée du milieu de préservation pendant la mise en contact avec les parties de plante ornementale ou dans laquelle au moins une partie du milieu de préservation est remplacée par un milieu de préservation ayant une teneur en eau inférieure pendant ladite mise en contact.

9. Méthode selon l'une quelconque des revendications précédentes, dans laquelle le milieu de préservation a une pression de 4-30 MPa (40 à 300 bars) et une température de 5 à 70°C.

10. Méthode selon la revendication 9, dans laquelle le milieu de préservation a une pression de 5-20 MPa (50 à 200 bars).

11. Méthode selon l'une quelconque des revendications précédentes, dans laquelle avant la mise en contact des parties de plante fraîche avec le milieu de préservation une solution aqueuse de biopolymère est introduite dans le xylème de ces parties de plante fraîche.

12. Fleur coupée préservée obtenue par une méthode selon l'une quelconque des revendications 1 à 11, ladite fleur coupée préservée ayant une teneur en eau inférieure à 45 % en poids et contenant au moins 5 % en poids de polyéthylène glycol.

13. Fleur coupée préservée selon la revendication 12, dans lequel la fleur coupée est imprégnée d'un biopolymère choisi dans le groupe comprenant amidon, alginate, chitine et des combinaisons de ceux-ci.

14. Fleur coupée préservée selon la revendication 12 ou 13, dans laquelle la fleur est choisie parmi *Gerbera, Phalaneopsis, Alstroemeria, Lilium, Chrysanthemum, Zantedeschia* et *Tulipa.*
